# EUROPÄISCHE PATENTSCHRIFT

(11) **EP 2 510 028 B1**
(45) Veröffentlichungstag und Bekanntmachung des Hinweises auf die Patenterteilung: **17.06.2015**
(21) Anmeldenummer: 10787789.6
(22) Anmeldetag: 10.12.2010
(51) Int. Cl.: C08G 18/10, C08G 18/12, C08G 18/40, C08G 18/42, C08G 18/63, C08G 18/65

(54) **DIMENSIONSSTABILE POLYURETHANSCHAUMSTOFFFORMKÖRPER**
DIMENSIONALLY STABLE POLYURETHANE MOLDED FOAM BODIES
CORPS MOULÉS EN MOUSSE DE POLYURÉTHANE À STABILITÉ DIMENSIONNELLE

(30) Priorität: 11.12.2009 EP 09178861
(43) Veröffentlichungstag der Anmeldung: 17.10.2012
(73) Patentinhaber: BASF SE, 67056 Ludwigshafen (DE)
(72) Erfinder: KAMM, Andre, 49163 Bohmte (DE); LORUSSO, Michele, Villafranca d´ Asti (IT); CUBUKCU, Erhan, 34912 Istanbul (TR)
(86) Internationale Anmeldenummer: PCT/EP2010/069376
(87) Internationale Veröffentlichungsnummer: WO 2011/070153

(56) Entgegenhaltungen:
- EP-A1- 1 790 675
- EP-A2- 1 266 918
- EP-A2- 1 541 607
- WO-A1-2005/116101

## Beschreibung

Die vorliegende Erfindung betrifft ein Verfahren zur Herstellung von Polyurethanschaumstoffformkörpem mit einer Dichte von 150 bis 450 g/L bei dem man a) organische Polyisocyanate mit b) Polyole, enthaltend b1) Polyesterole und b2) Polymerpolyetherole mit einem Anteil an primären OH-Gruppen von kleiner 50 %, c) Treibmitteln, enthaltend Wasser, und gegebenenfalls d) Kettenverlängerungsmitteln und/oder Vernetzungsmitteln, e) Katalysatoren und f) sonstigen Hilfsmitteln und/oder Zusatzstoffen, zu einer Reaktionsmischung vermischt, in eine Form gibt und zu einem Polyurethanschaumstoffformkörper ausreagieren lässt. Weiter betrifft die vorliegende Erfindung die Verwendung von solchen Polyurethanschaumstoffformkörpern als Schuhsohle.

Innerhalb der letzten Jahre ist ein Trend zu leichteren Schuhsohlen festzustellen. Die Reduktion der Dichte bei Polyurethanschuhsohlen führt allerdings zu Problemen mit der Dimensionsstabilität der Formkörper. Dies bedeutet, dass die gesamte Sohle kleiner wird oder aber die Oberflächengüte der Schuhsohlen durch geschrumpfte Stellen leidet.

Um die Dimensionsstabilität der Polyurethane zu verbessern werden in der Literatur verschiedene Möglichkeiten diskutiert. Beispielsweise beschreibt DE 2402734 die Herstellung von Polyurethanintegralschäumen bei denen ein Prepolymer auf Polyesterolbasis mit einer Polyolkomponente auf Basis von Polyetherolen vermischt wird. Nachteilig bei so hergestellten Polyurethansystemen ist, dass durch die Unverträglichkeit der Polyester- und Polyetherole die mechanischen Eigenschaften leiden und ein Schrumpfen der Polyurethanintegralschaumstoffe nicht verhindert werden kann.

Eine weitere in der Literatur beschriebene Möglichkeit ist der Einsatz von Graft- oder Polymerpolyolen. So beschreibt EP 1 042 384 die Herstellung von niederdichten, dimensionstabilien Schuhsohlen auf Pölyetherol Basis durch den Einsatz großen Mengen an Polyether-Graftpolyolen. Nachteilig an diesem Verfahren sind die deutlich schlechteren mechanischen Eigenschaften im Vergleich zu Schuhsohlen auf Polyesterol Basis. Ferner wirkt sich der hohe Anteil an Polymerpolyetherolen Nachteilig auf die Viskosität der Polyolkomponente aus.

In EP 1 790 675 und EP 1 756 187 wird der Einsatz von Polymerpolyolen auf Basis von Polyesterofen in einen Polyesterpolyurethan beschrieben. Durch die höhere Viskosität der großen Mengen an Polyester-Polymerpolyol sind diese Systeme deutlich schwieriger zu verarbeiten. Ferner offenbaren EP 1 790 675 und EP 1 756 187 den Einsatz von Polymerpolyolen auf Polyetherolbasis in Polyesterolpolyurethansystem. Die Schriften zeigen im Vergleichsbeispiel, dass er Einsatz von Polymerpolyetherolen zu einem Integralschaumstoff mit unzureichender Oberfläche und grober Zellstruktur führt.

Aufgabe der vorliegenden Erfindung war es einen Polyurethanschaumstoffformkörper, insbesondere einen Polyurethanintegralschaumstoff zu liefern, der auch in Dichtebereichen von kleiner 500 g/L nicht schrumpft und eine hervorragende Oberflächenbeschaffenheit aufweist.

Diese Aufgabe wird gelöst durch einen Polyurethanschaumstoffformkörper mit einer Dichte von 150 bis 450 g/L, erhältlich durch ein Verfahren, bei dem man a) organische Polyisocyanate mit b) Polyole, enthaltend b1) Polyesterole und b2) Polymerpolyetherole mit einem Anteil an primären OH-Gruppen von kleiner 50 %, c) Treibmitteln, enthaltend Wasser, und gegebenenfalls d) Kettenverlängerungsmitteln und/oder Vernetzungsmitteln, e) Katalysatoren und f) sonstigen Hilfsmitteln und/oder Zusatzstoffen, zu einer Reaktionsmischung vermischt, in eine Form gibt und zu einem Polyurethanschumstoffformkörper ausreagieren lässt.

Als Polyurethanschaumstoffformkörper werden im Rahmen der Erfindung Polyurethanschaumstoffe bezeichnet, die in einer Form hergestellt werden. Als Polyurethanintegralschaumstoffe im Sinn der Erfindung werden Polyurethan-Schaumstoffe nach DIN 7726 mit einer Randzone, die bedingt durch den Formgebungsprozess eine höhere Dichte als der Kern aufweist, verstanden. Die über den Kern und die Randzone gemittelte Gesamtrohdichte liegt dabei im Bereich von 150 g/L bis 450 g/L. Da auch Polyurethanintegralschaumstoffe in einer Form hergestellt werden, umfassen Polyurethanschaumstoffformkörper auch Polyurethanintegralschaumstoffe.

Die zur Herstellung der erfindungsgemäßen Polyurethanschaumstoffformkörper verwendeten organischen und/oder modifizierten Polyisocyanate (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind 4,4'-Metandiphenyldiisocyanat, 2,4'-Metandiphenyldiisocyanat, die Mischungen aus monomeren Metandiphenyldiisocyanaten und höherkernigen Homologen des Metandiphenyldiisocyanats (Polymer-MDI), Tetramethylendiisocyanat, Hexamethylendüsocyanat (HDI), Isophorondiisocyanat (IPDI), 2,4- oder 2,6-Toluylendiisocyanat (TDI) oder Mischungen der genannten Isocyanate.

Bevorzugt wird 4,4'-MDI verwendet. Das bevorzugt verwendete 4,4'-MDI kann 0 bis 20 Gew.-% 2,4' MDI und geringe Mengen, bis etwa 10 Gew.-%, allophanat- oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Die Polyisocyanatkomponente (a) wird bevorzugt in Form von Polyisocyanatprepolymeren eingesetzt. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C, mit Polyolen (a-2), zum Prepolymer umgesetzt werden.

Polyole (a-2) sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole (a-2) die unter b1) beschriebenen Polyesterole eingesetzt.

Gegebenenfalls werden den genannten Polyolen bei der Herstellung der Isocyanatprepolymere übliche Kettenverlängerer oder Vernetzungsmittel zugegeben. Solche Substanzen sind im Folgenden unter d) beschrieben.

Polyole b) enthalten Polyesterole b1) und Polymerpolyetherole b2) mit einem Anteil an primären OH-Gruppen von kleiner 50 % sowie gegebenenfalls Polymerpolyesterole b3) und/oder weitere Polyole, beispielsweise Polyetherole b4).

Als Polyesterole b1) können in der Polyurethanchemie üblicherweise verwendete Polyesterole eingesetzt werden. Polyesterole b1) können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol; 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B: Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhaftenrveise im Molverhältnis von 1 :1 bis 1,8, vorzugsweise 1 :1,05 bis 1,2 polykondensiert.

Die erhaltenen Polyesterpolyole besitzen vorzugsweise eine Funktionalität von 2 bis 4, insbesondere von 2 bis 3, und ein zahlenmittleres Molekulargewicht von 480 bis 3000, vorzugsweise 1000 bis 3000 g/mol.

Neben Polyesterolen b1) können auch noch weitere Polyole, beispielsweise Polyetherole b4) eingesetzt werden. Als Polyetherole b4) können alle in der Polyurethanchemie üblicherweise verwendeten Polyetherole eingesetzt werden. Polyetherole b4) können nach bekannten Verfahren hergestellt werden, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt werden Mischungen aus 1,2-Propylenoxid und Ethylenoxid.

Als Startermolekül kommen Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan in Betracht.

Die Polyetherpolyole, vorzugsweise Polyoxypropylen-polyoxyethylen-polyole, besitzen vorzugsweise eine Funktionalität von 2 bis 3 und zahlenmittlere Molekulargewichte von 1.000 bis 8.000, vorzugsweise von 2.000 bis 6.000 g/mol. Vorzugsweise werden, bezogen auf das Gewicht des Polyesterols b1), weniger als 50 Gew.-%, besonders bevorzugt weniger als 20 %, ganz besonders bevorzugt weniger als 5 Gew.-% und insbesondere kein Polyetherol eingesetzt.

Im Allgemeinen sind Polymerpolyole bekannt und kommerziell erhältlich. Polymerpolyole werden durch radikalische Polymerisation der Monomere, vorzugsweise Acrylniltril, Styrol sowie gegebenenfalls weiterer Monomerer, eines Makromers und gegebenenfalls eines Moderators unter Einsatz eines Radikal-Initiators, meist Azo- oder Peroxidverbindungen, in einem Polyetherol beziehungsweise Polyesterol als kontinuierliche Phase hergestellt. Dabei werden Polymerpolyole, die in einem Polyetherol als kontinuierliche Phase hergestellt wurden, als Polymerpolyetherole und Polymerpolyole, die in einem Polyesterol als kontinuierliche Phase hergestellt wurden, als Polymerpolyesterole b3) bezeichnet. Das Polyetherol oder das Polyesterol, das die kontinuierliche Phase und damit das Dispersionsmittel darstellt, wird häufig auch als Trägerpolyol bezeichnet. Beispielhaft für die Herstellung von Polymerpolyolen sind hier die Patentschriften US 4568705, US 5830944, EP 163188, EP 365986, EP 439755, EP 664306, EP 622384, EP 894812 und WO 00/59971 zu nennen.

Üblicherweise ist das eine in situ Polymerisation von Acrylnitril, Styrol oder vorzugsweise Mischungen aus Styrol und Acrylnitril, z.B. im Gewichtsverhältnis 90:10 bis 10:90 vorzugsweise 70:30 bis 30:70.

Als Trägerpolyole kommen alle unter b1) und b4) beschriebenen Polyole in Frage. Dabei weisen die Polyetherole zur Herstellung der Polymerpolyetherole einen Gehalt an primären OH-Gruppen von kleiner 50 Gew.-%, besonders bevorzugt kleiner 30 % und insbesondere kleiner 10 % auf.

Makromere, auch als Stabilisatoren bezeichnet, sind lineare oder verzweigte Polyetherole bzw. Polyesterpolyole mit Molekulargewichten > 1000 g/mol, die mindestens eine endständige, reaktionsfähige ethylenische ungesättigte Gruppe enthalten. Die ethylenisch ungesättigte Gruppe kann über Reaktion mit Carbonsäuren wie Acrylsäure, Carbonsäurehalogeniden wie Acrylsäurechlorid, Carbonsäure-Anhydriden, wie Maleinsäureanhydrid, Fumarsäure, Acrylat- und Methacrylat-derivaten, ethylenisch ungesättigten Epoxiden wie 1-Vinyl-cyclohexen-3,4-expoxid, 1-Butadienmonoxid, Vinylglycidylether, Glycidylmethacrylat und Allylglycidylether sowie Isocyanat-Derivaten, wie 3-Isopropenyl-1,1-dimethylbenzyl-Isocyanat, Isocyanato-ethylmethacrylat, an ein bereits bestehendes Polyol angefügt werden. Ein weiterer Weg ist die Herstellung eines Polyols durch Alkoxydation von Propylenoxid und Ethylenoxid unter Verwendung von Startmolekülen mit Hydroxylgruppen und einer ethylenischen Ungesättigtheit. Beispiele für solche Makromere sind in den Dokumenten US 4390645, US 5364906, EP 0461800, US 4997857, US 5358984, US 5990232, WO 01/04178 und US 6013731 beschrieben.

Während der radikalischen Polymerisation werden die Makromere mit in die Polymerkette eingebaut. Dadurch bilden sich Copolymere mit Polyether- bzw. Polyester- und einem Poly-Acrylnitril-Styrol-Blöcken, welche in der Grenzfläche von kontinuierlicher Phase und dispergierter Phase als Phasenvermittler wirken und das Agglomerieren der Polymerpolyolpartikel unterdrücken. Der Anteil der Makromere kann bis zu größer 90 Gew.-% betragen und beträgt üblicherweise 1 bis 60 Gew.-%, bevorzugt 1 bis 40 Gew.-% und besonders bevorzugt 1 bis 15 Gew.-%, jeweils bezogen auf das Gesamtgewicht der zur Herstellung des Polymerpolyols eingesetzten Monomere.

Zur Herstellung von Polymerpolyolen werden üblicherweise Moderatoren, auch als Kettenüberträger bezeichnet, eingesetzt. Die Moderatoren verringern durch Kettenübertragung des wachsenden Radikals das Molekulargewicht der sich bildenden Co-polymere, wodurch die Vernetzung zwischen den Polymermolekülen verringert wird, was die Viskosität und die Dispersionsstabilität sowie die Filtrierbarkeit der Polymerpolyole beeinflusst. Der Anteil der Moderatoren beträgt üblicherweise 0,5 bis 25 Gew.-%, bezogen auf das Gesamtgewicht der zur Herstellung des Polymerpolyols eingesetzten Monomere. Moderatoren, die üblicherweise zur Herstellung von Polymerpolyolen eingesetzt werden, sind Alkohole, wie 1-Butanol, 2-Butanol, Isopropano), Ethanol, Methanol, Cyclohexan, Toluene, Mercaptane, wie Ethanthiol, 1-Heptanthiol, 2-Octanethiol, 1-Dodecanthiol, Thiophenol, 2-Ethylhexylthioglycolate, Methylthioglycolate, Cyclohexylmercaptan sowie Enoletherverbindungen, Morpholine und a-(Benzoyloxy)styren. Bevorzugt wird Alkylmercaptan verwendet.

Zur Initiierung der radikalischen Polymerisation werden üblicherweise Peroxid- oder Azo-Verbindungen, wie Dibenzoyl-peroxide, Lauroylperoxide, t-Amylperoxy-2-ethylhexanoate, Di-t-butylperoxide, Diisopropyl peroxide carbonate, t-Butyl peroxy-2-ethylhexarioate, t-Butylperpivalate, t-Butylperneo-decanoate, t-Butylperbenzoate, t-Butyl percrotonate, t-Butyl perisobutyrate, t-Butylperoxy-1-methylpropanoate, t-Butylperoxy-2-ethylpentanoate, t-Butylperoxyoctanoate und Di-t-butylperphthalate, 2,2'-Azobis(2,4-dimethyl-valeronitrile), 2,2'-Azobisisobutyronitrile (AIBN), Dimethyl-2,2'-azobisisobutyrate, 2,2'-Azobis(2-methylbutyronitrile) (AMBN), 1,1'-Azobis(1-cyclohexanecarbonitrile), eingesetzt. Der Anteil der Initiatoren beträgt üblicherweise 0,1 bis 6 Gew.-%, bezogen auf das Gesamtgewicht der zur Herstellung des Polymerpolyols eingesetzten Monomere.

Die radikalische Polymerisation zur Herstellung von Polymerpolyolen wird aufgrund der Reaktionsgeschwindigkeit der Monomere sowie der Halbwertszeit der Initiatoren üblicherweise bei Temperaturen von 70 bis 150°C und einem Druck bis zu 20 bar durchgeführt. Bevorzugte Reaktionsbedingungen zur Herstellung von Polymerpolyolen sind Temperaturen von 80 bis 140°C bei einem Druck von Atmosphärendruck bis 15 bar.

Polymerpolyole werden in kontinuierlichen Verfahren, unter Einsatz von Rührkesseln mit kontinuierlichem Zu- und Ablauf, Rührkesselkaskäden, Rohrreaktoren und Loopreaktoren mit kontinuierlichem Zu- und Ablauf, oder in diskontinuierlichen Verfahren, mittels eines Batch Reaktors oder eines Semi-Batch Reaktors, hergestellt.

Die Reaktion zur Herstellung der Polymerpolyole kann auch in Gegenwart eines inerten Lösungsmittels durchgeführt werden. Als Lösungsmittel können beispielsweise eingesetzt werden: Benzol, Toluol, Xylol, Acetonitril, Hexan, Heptan, Dioxan, Ethylacetat, N,N-Dimethylformamid, N,N-Dimethylacetamid, etc. Bevorzugt sind Benzol, Xylol und Toluol.

Geeignete ethylenisch ungesättigte Monomere für die Herstellung des Feststoffanteils des Polymerpolyols sind beispielsweise Butadien, Isopren, 1,4-Pentadien, 1,6-Hexadien, 1,7-Octadien, Styrol, Alpha-Methylstyrol, 2-Methylstyrol, 3-Methylstyrol, 4-Methylstyrol, 2,4-Dimethylstyrol, Ethylstyrol, Isopropylstyrol, Butylstyrol, Phenylstyrol, Cyclohexylstyrol, Benzylstyrol und ähnlichen Derivate; substituierte Styrole wie Cyanostyrol, Nitrostyrol, N,N-Dimethylaminostyrol, Acetoxystyrol, Methyl-4-Vinylbenzoat, Phenoxystyrol, p-Vinylphenyoxid und ähnliche Derivate; Acrylate und substituierte Acrylate wie Acrylnitril, Acrylsäure, Methacrylsäure, Methacrylacrylat, 2-Hydroxyethylacrylat, Methylmethacylat, Cyclohexylmethacrylat, Benyzylmethacrylat, Isopropylmethacrylat, Octylmethacrylat, Methacrylnitril, Ethyl-alpha-ethoxyacrylat, Methyl-alphaacetaminoacrylate, Butylacrylat, 2-Ethylhexylacrylat, Phenylacrylat, Phenylmethacrylat, Acrylamid, N,N-Dimethylacrylamid, N,N-Dibenzylacrylamid, N-Butylacrylamid, Methacryloylformamid und ähnliche Derivate; Vinylester, Vinylether, Vinylketone, etc. wie Vinylacetat, Vinylbutyrat, Isopropenylacetat, Vinylformiat, Vinylacrylate, Vinylmethacrylat, Vinylmethoxyacetat, Vinylbenzoat, Vinyltoluol, Vinylnaphtalin, Vinylmethylether, Vinylpropylether, Vinylbutylether, Vinyl-2-ethylhexylether, Vinylphenylether, Vinyl-2-methoxyethylether, Methoxybutadien, Vinyl-2-butoxyethylether, 2,4-Dihydro-1,2-Pyran, 2-Butoxy-2'-Vinyloxydiethylether, Vinylmethylketon, Vinylethylketon, Vinylphenyketon, Vinylethylsulfon, N-methyl-N-vinylacetamid, N-vinylpyrrolidon, vinylimidazol, Dinvinylsulfoxid, Divinylsulfon, Natrium-vinylsulfonat, Methylvinylsulfonat, N-Vinylpyrrol, Vinylphosphonat, und ähnliche Derivate; Dimethylfumarat, Dimethylmaleat, Maleinsäure, Crotonsäure, Fumarsäure, Itaconsäure, Monomethylitaconat, t-Butylaminoethylmethacrylat, Dimethylaminoethyl-methacrylat, Glycidylacrylat, Allylalkohol, Glycolmonoester von Itaconsäure, Vinylpyridin und ähnlichen Derivaten. Bevorzugte ethylenisch ungesättigte Monomere sind Styrol, Acrylnitril, Acrylate und Acrylamide.

In einer bevorzugten Ausführungsform werden als ethylenisch ungesättigte Monomere Acrylnitril, Styrol, insbesondere Styrol und Acrylnitril im Verhältnis zwischen 1:3 bis 3:1 verwendet. Bevorzugt wird weiterhin zur Polymerisation ein Makromer zugegeben. Gegebenenfalls wird die Polymerisation ferner unter Einsatz eines Moderators und unter Einsatz eines Radikal-Initiators durchgeführt.

In einer bevorzugten Ausführungsform enthält der Feststoffanteil Acrylnitril, Styrol und Makromer, wobei der Anteil an Acrylnitril 10 bis 75 Gew.-% und bevorzugt 25 bis 35 Gew.-%, der Anteil an Styrol 30 bis 90 Gew.-%, bevorzugt 55 bis 70 Gew.-% und der Anteil an Makromer 1 bis 10 Gew.-%, bevorzugt 3 bis 6 Gew.-%, bezogen auf das Gesamtgewicht des Feststoffanteils des Polymerpolyols, beträgt.

In einer bevorzugten Ausführungsform weist das Polymerpolyol einen Feststoffanteil von 10 bis 90 Gew.-%, besonders bevorzugt 15 bis 60 und insbesondere 20 bis 55 Gew.-%, bezogen auf das Gesamtgewicht des Polymerpolyols, auf. Dabei beträgt der Feststoffanteil, bezogen auf das Gesamtgewicht der Polyolkomponente b) vorzugsweise 1 bis 10 Gew.-%, besonders bevorzugt 2 bis 7 Gew.-% und insbesondere 2,5 bis 6 Gew.-%.

Der Feststoffgehalt von Polymerpolyolen errechnet sich aus dem prozentualen Verhältnis der eingesetzten Monomeren und des Makrömeren, zu den eingesetzten Trägerpolyolen und wird am fertigen Polymerpolyol üblicherweise gravimetrisch aus dem prozentualen Verhältnis der Feststoffmasse zu Gesamtmasse des Polymerpolyols bestimmt.

Der Anteil an Polymerpolyetherol b2) am Gesamtgewicht der Polyolkomponente b) beträgt vorzugsweise 0,5 bis 20 Gew.-%. Der Anteil an Polymerpolyesterol b3) am Gesamtgewicht der Polyolkomponente b) beträgt vorzugsweise 0 bis 30 Gew.-%, besonders bevorzugt 1 bis 10 Gew.-%. Werden Pölymerpolyetherol b2) und Polymerpolyesterol b3) gemeinsam eingesetzt beträgt das Verhältnis von Polymerpolyetherol b2) zu Polymerpolyesterol b3) vorzugsweise 1 20 bis 20 : 1, besonders bevorzugt 1 : 5 bis 5 : 1. Dabei wird eine Kombination aus Polymerpolyetherol b2) und Polymerpolyesterol b3) vorzugsweise zur Herstellung von Polyurethanschaumstoffformkörper mit einer Höhe von mindestens 1,5 cm, besonders bevorzugt von mindestens 5 cm, verwendet. Dabei wird unter "Höhe" des Polyurethanschaumstoffformkörpers die größte Distanz in der Form zur Herstellung des erfindungsgemäßen Polyurethanschaumstoffformkörpers in Steigrichtung des Schaums verstanden.

Ferner sind bei der Herstellung von Polyurethanschaumstoffformkörpern Treibmittel c) zugegen. Diese Treibmittel c) enthalten Wasser. Als Treibmittel c) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird als Treibmittel eine Mischung enthaltend mindestens eines dieser Treibmittel und Wasser eingesetzt, insbesondere Wasser als alleiniges Treibmittel.

Der Gehalt an Wasser beträgt in einer bevorzugten Ausführungsform von 0,1 bis 2 Gew.%, bevorzugt 0,2 bis 1,5 Gew.-%, besonders bevorzugt 0,3 bis 1,2 Gew.-%,, bezogen auf das Gesamtgewicht der Komponenten a) bis f).

In einer weiteren bevorzugten Ausführungsform werden der Umsetzung der Komponenten a) bis f) als zusätzliches Treibmittel Mikrohohlkugeln, die physikalisches Treibmittel enthalten, zugegeben. Die Mikrohohlkugeln können auch im Gemisch mit den vorstehend genannten Treibmitteln eingesetzt werden.

Die Mikrohohlkugeln bestehen üblicherweise aus einer Hülle, aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3 615 972 beschrieben. Die Mikrohohlkugeln weisen im Allgemeinen einen Durchmesser von 5 bis 50 µm auf. Beispiele für geeignete Mikrohohlkugeln sind unter dem Handelsnamen Expancell^{®} der Firma Akzo Nobel erhältlich.

Die Mikrohohlkugeln werden im Allgemeinen in einer Menge von 0,5 bis 5 Gew.-%, bezogen auf das Gesamtgewicht der Komponenten b), c) und d) zugesetzt.

Als Kettenverlängerungsmittel und/oder Vernetzungsmittel d) werden Substanzen mit einem Molekulargewicht von vorzugsweise kleiner 500 g/mol, besonders bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können bevorzugt einzeln oder in Form von Mischungen eingesetzt werden. Vorzugsweise werden Diole und/oder Triole mit Molekulargewichten kleiner als 400, besonders bevorzugt von 600 bis 300 und insbesondere 60 bis 150 eingesetzt. In betracht konnen beispielweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (d) Mono-ethylenglycol, 1,4-Butandiol, Glycerin oder Mischungen davon eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten b) und d), zum Einsatz.

Als Katalysatoren e) zur Herstellung der Polyurethanschaumstoffe werden bevorzugt Verbindungen verwendet, welche die Reaktion der Polyole b) und gegebenenfalls Kettenverlängerungs- und Vernetzungsmittel d) mit den organischen, gegebenenfalls modifizierten Polyisocyanaten a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl-und N-Ethyldiethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate; wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente b).

Der Reaktionsmischung zur Herstellung der Polyurethanschäume können gegebenenfalls auch noch Hilfsmittel und/oder Zusatzstoffe f) zugegeben werden. Genannt seien beispielsweise oberflächenaktive Substanzen, Schaumstabilisatoren, Zellregler, weitere Trennmittel, Füllstoffe, Farbstoffe, Pigmente, Hydrolyseschutzmittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalköhole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkänresten als Seitengruppen. Die oberflächenaktiven Substanzen werden üblicherweise in Mengen von 0,01 bis 5 Gew.-Teilen, bezogen auf 100 Gew.-Teile der Komponente b), eingesetzt.

Als geeignete weitere Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder-amide, hergestellf durch Veresterung oder Amidierung einer Mischung aus Montansäure und xnindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 b37 offenbart. Vorzugsweise enthalten erfindungsgemäße Reaktionsmischungen keine weiteren Trennmittel.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat. Als organische Füllstoffe kommen beispielsweise in Betracht: Ruß, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten a) bis d), zugegeben.

Weiter ist Gegenstand der vorliegenden Erfindung ein Verfahren zur Herstellung eines Polyurethanschaumstoffformkörpers, insbesondere eines Polyurethanintegralschaumstoffs bei dem die Komponenten a) bis c) und gegebenenfalls d), e) und/oder f) in solchen Mengen miteinander vermischt werden, dass das Äquivalenzverhältnis von NCO-Gruppen der Polyisocyanate (a) zur Summe der reaktiven Wasserstoffatome der Komponenten (b), (c) und (d) 1 : 0,8 bis 1 : 1,25, vorzugsweise 1 : 0,9 bis 1 : 1,15 beträgt.

Die erfindungsgemäßen Polyurethanschaumstoffformkörper werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im "Kunststoffhandbuch", Band 7, Polyurethane, 3. Auflage, 1993, Kapitel 7.

Die Ausgangskomponenten a) bis f) werden dazu vorzugsweise bei einer Temperatur von 15 bis 90 °C, besonders bevorzugt von 25 bis 55 °C gemischt und die Reaktionsmischung gegebenenfalls unter erhöhtem Druck in das Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160°C, vorzugsweise 30 bis 120 °C, besonders bevorzugt 30 bis 60 °C. Dabei wird im Rahmen der Erfindung die Mischung der Komponenten a) bis f) bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wird so bemessen, dass die erhaltenen Formkörper, insbesondere Integralschaumstoffe, eine Dichte von 150 g/L bis 450 g/L. aufweisen. Die Verdichtungsgrade zur Herstellung der erfindungsgemäßen Polyurethanintegralschaumstoffe liegen im Bereich von 1,1 bis 8,5, vorzugsweise von 1,7 bis 7,0.

Die erfindungsgemäßen Polyurethanschaumstofffformkörper werden vorzugsweise als Schuhsohle und besonders bevorzugt als (Zwischen-)Sohle, zum Beispiel für Straßenschuhe, Sportschuhe, Sandalen und Stiefel eingesetzt. Insbesondere werden die erfindungsgemäßen Polyurethanintegralschaumstoffe als Zwischensohle für Sportschuhe oder als Sohlenmaterial hochhackige Damenschuhe eingesetzt. Dabei beträgt die Dicke der Sohle an der dicksten Stelle vorzugsweise mehr als 3 cm, besonders bevorzugt von mehr als 5 cm. Weiter können erfindungsgemäße Polyurethanschaumstoffe im Innenbereich von Verkehrsmitteln beispielsweise in Autos als Lenkräder, Kopfstützen oder Schaltknöpfe oder als Stuhlarmlehnen verwendet. Weitere Verwendungsmöglichkeiten sind als Armlehne für Stühle oder als Motorradsitze.

Im Folgenden soll die Erfindung anhand von Beispielen verdeutlicht werden.

### Beispiele

Verwendete Einsatzstoffe
- Polyol 1:: Polyesterol auf Basis von Adipinsäure, Monoethylenglycol, Diethylenglycol und Glycerin mit einer OH-Zahl von 91 mg KOH/g und einer Viskosität von 261 mPas bei 75°C
- Polyol 2:: Polyesterol auf Basis einer Mischung von Bernsteinsäure, Glutarsäure und Adipinsäure, Monoethylenglycol und Glycerin mit einer OH-Zahl von 58 mg KOH/g und einer Viskosität von 430 mPas bei 100°C
- Polyol 3:: Polyesterol auf Basis einer Mischung von Bernsteinsäure, Glutarsäure, Adipinsäure und Monoethylenglycol mit einer OH-Zahl von 56 mg KOH/g und einer Viskosität von 650 mPas bei 75°C
- Polyol 4:: Graftpolyol basierend auf einen Polyetherol auf Basis von Glycerin, Propylenoxid und Ethylenoxid mit einem Ethylenoxid-Endcap, einen Feststoffanteil von 45 Gew.-%, einer OH-Zahl von 20 mg KOH/g und einer Viskosität von 7500 mPas bei 25°C
- Polyol 5:: Polyetherol auf Basis von Glycerin, Propylenoxid und Ethylenoxid mit einen Ethylen-/Propylenoxid Mischcap, einer OH-Zahl von 56 mg KOH/g und einer Viskosität von 460 mPas bei 25°C
- Polyol 6:: Graftpolyol auf Basis von Polyol 5 mit einem Feststoffanteil von 45 Gew.-% einer OH-Zahl von 30 mg KOH/g und einer Viskosität von 4500 mPas bei 25°C
- Polyol 7:: Graftpolyol PM 245® der Firma Synthesia basierend auf Polyesterol mit einer OH-Zahl von 60 mg KOH/g
- KV1:: Monethylenglycol
- V1:: Triethanolamin
- V2:: Glycerin
- Kalt 1:: Dabco gelöst in Monoethylenegylcol
- Kat 2:: Niax A1® der Firma Air Products
- Stabi:: Dabco DC 193® der Firma Air Products
- ISO1:: Monomer-MDI
- ISO 2:: Monomer-MDI, enthaltend ca. 25 Gew.-% carbodiimidmodifiziertes Monomer-MDI
- DIBIS:: Diglycol-bis-chlorformiat
- FP:: Farbpaste

### Prepolymerherstellung:

### Prepolymer 1 (Prepo1):

In einem 2 L 4-Halskolben mit Stickstoffeinleitung, Rührer, Kühler und Tropftrichter wurden 927,9g ISO 1, 75g ISO 2 und 0,15g DIBIS vorgelegt und auf etwa 60°C erwärmt. Bei 60°C wurden 496,95g des Polyols 1 langsam über einen Zeitraum von 30 Minuten zugegeben und 2 Stunden bei 80°C nachgerührt. Das erhaltene Prepolymere hatte einen NCO-Gehalt von 20,0 %

### Prepolymer 2 (Prepo 2):

In einem 2 L 4-Halsk'olben mit Stickstoffeinleitung, Rührer, Kühler und Tropftrichter wurden 884,85g ISO 1, 1-80g ISO 2 und 0,15g DIBIS vorgelegt und auf etwa 60°C erwärmt. Bei 60°C wurden 435g des Polyols 2 langsam über einen Zeitraum von 30 Minuten zugegeben und 2 Stunden bei 80°C nachgerührt. Das erhaltene Prepolymere hatte einen NCO-Gehalt von 21,8 %

Es wurden die erfindungsgemäßen Beispiele E1 bis E4 sowie die Vergleichsbeispiele V1 bis V4 durchgeführt. Dazu wurden die in Tabelle 1 angegebenen Komponenten (Angaben in Gewichtteile) mit den markierten Isocyanatprepolymeren bei angegebenen Isocyanatindex vermischt und jeweils einmal frei verschäumt und einmal in eine Sohlenform mit der in der Tabelle angegebenen Hackenhöhe in cm (HH) gegeben, so Formkörper mit einer Dichte von 380 g/L entstanden. Die Dichte des frei verschäumte Polyurethanschaumstoffs in g/L (Dichte fr) ist ebenfalls in Tabelle 1 angegeben.

**Tabelle 1:**

| | V1 | V2 | V3 | V4 | E1 | E2 | E3 | E4 |
|---|---|---|---|---|---|---|---|---|
| Polyol 1 | 83,5 | 73,5 | 76,0 | | 73,5 | | | |
| Polyol 2 | | | | 28,49 | | 28,49 | 28,49 | 28,49 |
| Polyol 3 | | | | 46,88 | | 46,88 | 46,88 | 46,88 |
| Polyol 4 | | 10 | | | | | | |
| Polyol 5 | | | 7,5 | | | | | |
| Polyol 6 | | | | | 10 | 6,17 | 6,17 | 1,43 |
| Polyol 7 | | | | 6,17 | | | | 4,75 |
| KV1 | 13,39 | 13,39 | 13,39 | 12,35 | 13,39 | 12,35 | 12,35 | 12,35 |
| V1 | | | | 0,29 | | 0,29 | 0,29 | 0,29 |
| V2 | 0,41 | 0,41 | 0,41 | | 0,41 | | | |
| Kat 1 | 0,93 | 0,93 | 0,93 | 1,24 | 0,93 | 1,24 | 1,24 | 1,24 |
| Kat 2 | 0,10 | 0,1 | 0,1 | | 0,1 | | | |
| Stabi | 1,03 | 1,03 | 1,03 | 0,22 | 1,03 | 0,22 | 0,22 | 0,22 |
| Prepo 1 | X | X | X | | X | | | |
| Prepo 2 | | | | X | | x | X | X |
| Wasser | 0,64 | 0,64 | 0,64 | 0,56 | 0,64 | 0,56 | 0,56 | 0,56 |
| FP | | | | 3,8 | | 3,8 | 3,8 | 3,8 |
| Index | 98 | 98 | 98 | 100 | 98 | 100 | 100 | 100 |
| Dichte fr | 196 | 180 | 198 | 213 | 193 | 213 | 213 | 210 |
| HH | 3,5 | 3,5 | 3,5 | 3,5 | 3,5 | 3,5 | 10 | 10 |

24 Stunden nach Herstellung wurden die Formkörper begutachtet. Dabei zeigten so-wohl der freigeschäumte Schaum als auch der Formkörper gemäß Vergleichsbeispiele V 1 bis V4 einen deutlichen Schrumpf bzw. lokalen Schrumpf auf der Oberfläche

Der freigeschäumte Schaum als auch der Formkörper gemäß den erfindungsgemäßen Beispielen E1 bis E4 zeigten keinerlei Anzeichen von Schrumpf. Ferner zeichneten sich die Formkörper durch eine gute Oberflächengüte aus. Der Formkörper nach Beispiel E3 wies im oberen Drittel der Sohle eine grobe, inhomogene Zellstruktur auf, die sich unter Last (menschlicher Körper) komprimieren ließ und damit sich negativ auf die Stabilität des Schuhs auswirkte. Durch die Kombination aus Polymerpolyetherol und Polymerpolyesterol gemäß Beispiel E4 konnte dieser Nachteil behoben werden. Der Polyurethanintegralschaumstoff nach Beispiel E4 zeigte eine homogene mikrozellüläre Schaumstruktur.

## Patentansprüche

1. Verfahren zur Herstellung von Polyurethanschaumstoffformkörper mit einer Dichte von 150 bis 450 g/L, bei dem man
a) organische Polyisocyanate mit
b) Polyolen, enthaltend
b1) Polyesterole
b2) Polymerpolyetherole mit einem Anteil an primären OH-Gruppen von kleiner 50%.
c) Treibmitteln, enthaltend Wasser und gegebenenfalls
d) Kettenverlängerungsmitteln und/oder Vernetzungsmitteln,
e) Katalysatoren und
f) sonstigen Hilfsmitteln und/oder Zusatzstoffen,
zu einer Reaktionsmischung vermischt, in eine Form gibt und zu einem Polyurethanschaümstoffformkörper ausreagieren lässt.

2. Verfahren nach Anspruch 1, **dadurch gekennzeichnet, dass** der Gehalt an Wasser 0,1 bis 2 Gew.-%, bezogen auf die Komponenten (a) bis (f) beträgt.

3. Verfahren nach Anspruch 1 oder 2, **dadurch gekennzeichnet, dass** die Komponente b) als Komponente b3) ein Polymerpolyesterol enthält.

4. Polyurethanschaumstoffformkörper, erhältlich nach einem der Ansprüche 1 bis 3.

5. Verwendung eines Pölyurethanschaumstoffformkörpers nach Anspruch 4 als Schuhsohle.

## Claims

1. A process for producing polyurethane foam moldings having a density of from 150 to 450 g/l, wherein
a) organic polyisocyanates are mixed with
b) polyols comprising
b1) polyesterols and
b2) polymer polyetherols having a proportion of primary OH groups of less than 50%,
c) blowing agents comprising water and optionally
d) chain extenders and/or crosslinkers,
e) catalysts and
f) other auxiliaries and/or additives
to form a reaction mixture, the latter is introduced into a mold and allowed to react to form a polyurethane foam molding.

2. The process according to claim 1, wherein the water content is from 0.1 to 2% by weight, based on the components (a) to (f).

3. The process according to claim 1 or 2, wherein the component b) comprises a polymer polyesterol as component b3).

4. A polyurethane foam molding which can be obtained according to any of claims 1 to 3.

5. The use of a polyurethane foam molding according to claim 4 as shoe sole.

## Revendications

1. Procédé de fabrication de corps moulés en mousse de polyuréthane d'une densité de 150 à 450 g/l, selon lequel
a) des polyisocyanates organiques sont mélangés avec
b) des polyols contenant
b1) des polyesterols,
b2) des polyétherols polymères contenant une proportion de groupes OH primaires inférieure à 50 %,
c) des agents gonflants, contenant de l'eau, et éventuellement
d) des allongeurs de chaînes et/ou des agents de réticulation,
e) des catalyseurs et
f) d'autres adjuvants et/ou additifs,
pour former un mélange réactionnel, introduits dans un moule et laissés réagir pour former un corps moulé en mousse de polyuréthane.

2. Procédé selon la revendication 1, **caractérisé en ce que** la teneur en eau est de 0,1 à 2 % en poids, par rapport aux composants (a) à (f).

3. Procédé selon la revendication 1 ou 2, **caractérisé en ce que** le composant b) contient un polyesterol polymère en tant que composant b3).

4. Corps moulé en mousse de polyuréthane, pouvant être obtenu selon l'une quelconque des revendications 1 à 3.

5. Utilisation d'un corps moulé en mousse de polyuréthane selon la revendication 4 en tant que semelle de chaussure.
